# EUROPEAN PATENT APPLICATION

(11) **EP 4 299 163 A1**
(43) Date of publication of application: **03.01.2024**
(21) Application number: 22759622.8
(22) Date of filing: 22.02.2022
(51) Int. Cl.: B01D 53/86, B01D 53/90, F23J 15/00

(54) **HEAT EXCHANGE PIPING CONFIGURATION FOR VAPORIZING AMMONIA IN DENITRIFICATION DEVICE**

(30) Priority: 24.02.2021 JP 2021027668
(71) Applicant: Mitsubishi Heavy Industries, Ltd., Tokyo 100-8332 (JP)
(72) Inventor: II Shinya, Tokyo 100-8332 (JP); OGASAHARA Toru, Tokyo 100-8332 (JP); HARADA Tomokazu, Tokyo 100-8332 (JP); UNE Hideki, Tokyo 100-8332 (JP)
(74) Representative: Studio Torta S.p.A.
(86) International application number: PCT/JP2022/007146
(87) International publication number: WO 2022/181586

(57) **Abstract**

A denitration apparatus, comprising a denitration reactor, an inlet duct, air heating tubes, an ammonia vaporizer and an ammonia injection tube, wherein the denitration reactor comprises a flow channel through which combustion flue gas flows and a catalyst layer located in the flow channel, the inlet duct comprises a flow path configured to lead the combustion flue gas to the catalyst layer, the air heating tubes are placed in the flow path of the inlet duct and configured to warm air passing through an inside of the air heating tube using thermal energy of the combustion flue gas, a high-temperature air conveying tube configured to convey the air warmed by the air heating tube and an ammonia supplying tube configured to convey ammonia are connected to the ammonia vaporizer, the ammonia is mixed with the warmed air in the ammonia vaporizer to warm the ammonia, and the ammonia injection tube is configured to inject the ammonia warmed in the ammonia vaporizer into the flow path of the inlet duct through the ammonia injection tube to mix the warmed ammonia with the combustion flue gas.

## Description

### TECHNICAL FIELD

The present invention relates to a heat exchange piping configuration for ammonia vaporization in a denitration apparatus.

### BACKGROUND ART

Various devices for feeding a reducing agent such as ammonia used for removing nitrogen oxides contained in combustion flue gas have been proposed.

For instance, Patent document 1 discloses an ammonia injector for a denitration apparatus configured to reduce nitrogen oxides contained in combustion flue gas exhausted from a combustion device into harmless nitrogen and water, characterized in that ammonia water can be used as an ammonia source, a thermal source composed of air heated by a heater and a thermal source composed of the flue gas from the combustion device can be used as a thermal source for vaporizing the ammonia water, and during operation of the combustion device, the thermal source for vaporizing is switched from the thermal source composed of the heated air to the thermal source composed of the flue gas, or is switched from the thermal source composed of the flue gas to the thermal source composed of the heated air.

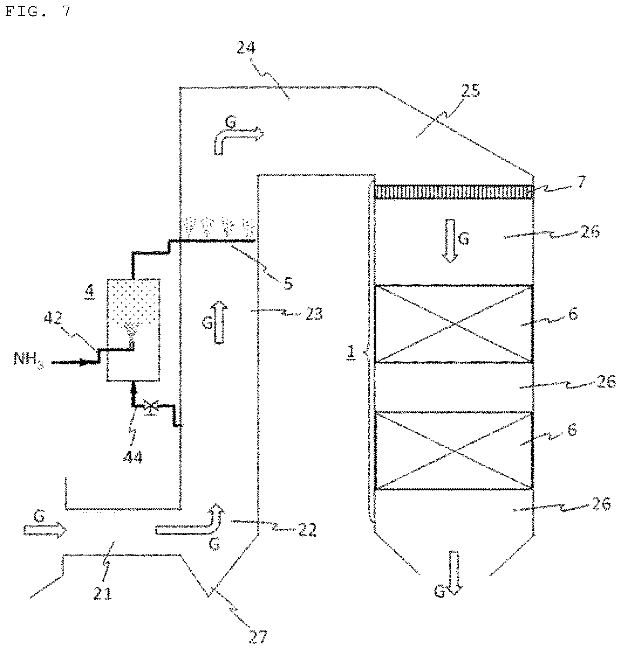

Patent document 2 discloses a flue gas denitration apparatus for denitration by bring nitrogen oxides contained in a flue gas into contact with a reducing agent such as ammonia or its precursor in the presence of a denitration catalyst, characterized in that the apparatus comprises a bleed pipe for extracting a part of the flue gas in a gas duct from an upstream region of a device for injecting the ammonia or precursor thereof; a vaporizer for vaporization of the ammonia or precursor thereof by spraying the ammonia or precursor thereof into the flue gas extracted through the bleed pipe; and a nozzle for injecting the ammonia or its precursor vaporized in the vaporizer into upstream gas duct of the denitration catalyst (See FIG. 7) .

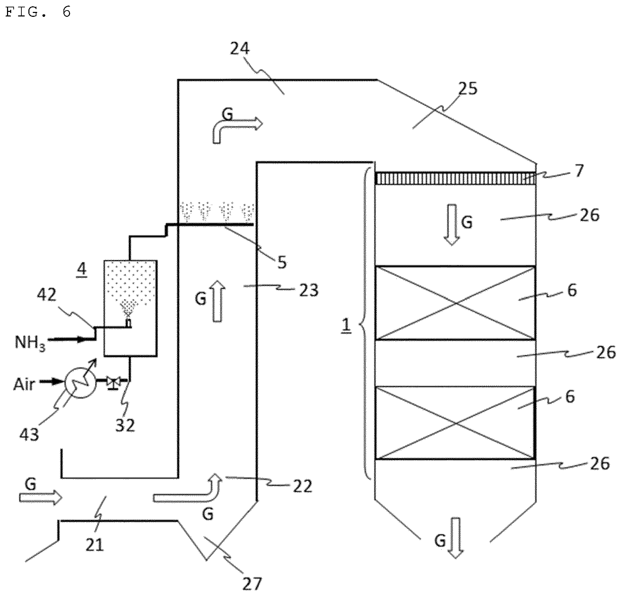

Patent document 3 disclose a reducing agent injection device for a denitration apparatus, wherein the denitration apparatus applied to a boiler power plant, wherein the boiler power plant comprises an air preheater installed in a boiler flue gas duct to raise the temperature of air to be fed to the boiler by a flue gas, the reducing agent injection device comprising a device for injecting a reducing agent for denitration into the denitration apparatus and a device for vaporizing a reducing agent aqueous solution by a heating source and supplying it to the reducing agent injection device; characterized in that ammonia water is used as the reducing agent, and high-temperature air at an outlet of the air preheater is used as the heating source (See Figure 6).

Patent document 4 discloses an ammonia water vaporizer for flue gas denitration equipment, the flue gas denitration equipment comprising a vaporizer for mixing a heat medium such as air with ammonia water to vaporize the ammonia water; an ammonia injection means installed upstream of a catalyst layer provided in a flue gas duct, and a connecting pipe for supplying the ammonia generated in the vaporizer to the ammonia injection means; characterized in that the vaporizer is installed upstream of the ammonia injection means in the flue gas duct; a heat exchanger is installed upstream of the vaporizer in the flue gas duct, the heat medium is heated by the heat exchanger and is supplied to the vaporizer, and the connecting pipe is connected to the ammonia injection pipe in the flue gas duct.

### CITATION LIST

### PATENT LITERATURES

Patent Document 1 : JP H05-49856 A
Patent Document 2 : JP H07-16431 A
Patent Document 3 : JP H09-38466 A
Patent Document 4 : JP 2004-261762 A

### SUMMARY OF THE INVENTION

### PROBLEMS TO BE RESOLVED BY THE INVENTION

An object of the present invention is to provide a novel denitration apparatus and a novel ammonia feeding device.

### MEANS FOR SOLVING THE PROBLEMS

The present invention includes the following embodiments.
[1] A denitration apparatus, comprising
   a denitration reactor,
   an inlet duct,
   air heating tubes,
   an ammonia vaporizer and
   an ammonia injection tube,
   wherein
   the denitration reactor comprises a flow channel
   through which combustion flue gas flows and a catalyst layer located in the flow channel,
   the inlet duct comprises a flow path configured to lead the combustion flue gas to the catalyst layer,
   the air heating tubes are placed in the flow path of the inlet duct and configured to warm air passing through an inside of the air heating tube using thermal energy of the combustion flue gas,
   the ammonia vaporizer is configured to mix ammonia with the warmed air in the ammonia vaporizer to warm the ammonia, and
   the ammonia injection tube is configured to inject the ammonia warmed in the ammonia vaporizer into the flow path of the inlet duct through the ammonia injection tube to mix the warmed ammonia with the combustion flue gas.
[2] The denitration apparatus according to [1], the air heating tubes are arranged such that longitudinal directions of the air heating tubes are parallel to each other and orthogonal to the longitudinal direction of the flow path of the inlet duct.
[3] An ammonia feeding device for use in a denitration apparatus, wherein the denitration apparatus comprises a denitration reactor and an inlet duct, wherein the denitration reactor comprises a flow channel through which combustion flue gas flows and a catalyst layer located in the flow channel, and the inlet duct comprises a flow path configured to lead the combustion flue gas to the catalyst layer,
   the ammonia feeding device comprises air heating tubes, an ammonia vaporizer and an ammonia injection tube,
   the air heating tubes are placed in the flow path of the inlet duct and configured to warm air passing through an inside of the air heating tube using thermal energy of the combustion flue gas,
   the ammonia vaporizer is configured to mix ammonia with the warmed air in the ammonia vaporizer to warm the ammonia, and
   the ammonia injection tube is configured to inject the ammonia warmed in the ammonia vaporizer into the flow path of the inlet duct through the ammonia injection tube to mix the warmed ammonia with the combustion flue gas.
[4] The ammonia feeding device according to [3], the air heating tubes are arranged such that longitudinal directions of the air heating tubes are parallel to each other and orthogonal to the longitudinal direction of the flow path of the inlet duct.

### ADVANTAGEOUS EFFECTS OF THE INVENTION

In the denitration apparatus of the present invention, the combustion flue gas and the ammonia can be uniformly mixed, and the flow of the combustion flue gas introduced into the catalyst layer is less likely to be biased, therefore NOX removal efficiency with respect to ammonia consumption can be made higher. In the denitration apparatus of the present invention, clogging of the catalyst layer and uneven wear of the catalyst layer are unlikely to occur, equipment problems due to ammonium sulfate generation can be suppressed, and long-term stable operation is possible.

In the ammonia feeding device of the present invention, ammonia (liquid) can be efficiently heated to be vaporized, the warmed ammonia can be uniformly mixed with the combustion flue gas, and the flow of combustion flue gas introduced into the catalyst layer can be made uniform. As a result, there is no need to inject an excess amount of ammonia far exceeding the stoichiometric ratio of ammonia in the NOX removal reaction, and running cost can be reduced.

Since steam generated by boiler or electricity generated with electricity generator is not used in the air preheater, the energy efficiency of power generation is not lowered. Further, since combustion flue gas is not supplied to the ammonia vaporizer, wear of the ammonia vaporizer can be reduced.

### BRIEF DESCRIPTION OF THE DRAWINGS

[FIG. 1] is a schematic diagram showing an example of the denitration apparatus according to the present invention.
[FIG. 2] is a schematic view of the ammonia feeding device shown in FIG. 1 as viewed from the side.
[FIG. 3] is a schematic view of the ammonia feeding device shown in FIG. 1 as viewed from above.
[FIG. 4] is a schematic oblique perspective view showing arrangement of the air heating tubes constituting the ammonia feeding device shown in FIG. 1 .
[FIG. 5] is a schematic diagram showing an air heating tube with a gabled baffle.
[FIG. 6] is a schematic diagram showing an example of a conventional denitration apparatus (mixing type of heater-heated air and ammonia).
[FIG. 7] is a schematic diagram showing an example of a conventional denitration apparatus (mixing type of combustion flue gas and ammonia).

### EMBODIMENTS FOR CARRYING OUT THE INVENTION

Embodiments of the present invention will be specifically described based on the drawings. In addition, the scope of the present invention is not limited by the following embodiments.

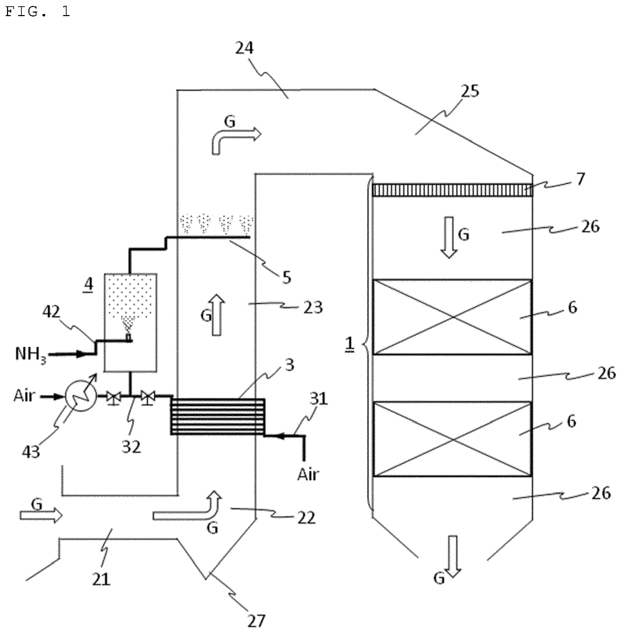

FIG. 1 is the diagram showing an example of the denitration apparatus according to the present invention. The denitration apparatus comprises a denitration reactor 1, an inlet duct, and an ammonia feeding device of the present invention.

The ammonia feeding device of the present invention comprises air heating tubes 3, an ammonia vaporizer 4 and an ammonia injection tube 5.

The denitration reactor 1 has a flow channel through which combustion flue gas flows, and a catalyst layer 6 is located in the flow channel. The flow channel of the denitration reactor can have a cross-sectional shape of rectangular, trapezoidal, circular, elliptical, or the like. Of these, rectangular is preferred. The flow channel of the denitration reactor can conduct gas in any direction (eg, horizontally, upward, downward, etc.). The denitration apparatus shown in FIG. 1 is provided with a flow channel 26 for conducting gas vertically downward. The catalyst layer is filled with a denitration catalyst. As the denitration catalyst, those having a shape such as a plate shape, a honeycomb shape, a corrugated shape, or the like can be used. The catalyst active component is not particularly limited as long as it facilitates the denitration reaction. A screening plate 7 may be provided at the inlet of the denitration reactor for purposes such as aligning the gas flow.

The inlet duct has a flow path for conducting combustion flue gas to the catalyst layer. Combustion flue gas is gas emitted when a fuel such as fossil fuel, biomass fuel, liquefied gas fuel and ammonia fuel is burned in a boiler, gas turbine, or the like. The present invention is suitable for gas emitted when burning coal fuel. The flow path of the inlet duct can be rectangular, trapezoidal, circular, elliptical, etc. in cross-sectional shape. Of these, rectangular is preferred. The flow path of the inlet duct can conduct the gas vertically upward, vertically downward, horizontally, diagonally upward or diagonally downward.

The denitration apparatus shown in FIG. 1 comprises a first horizontal flow path 21, an oblique upward flow path 22, a vertical upward flow path 23, a second horizontal flow path 24, and an oblique downward flow path 25. An outlet end of the oblique downward flow path 25 is connected to an inlet end of the vertical downward flow channel 26 of the denitration reactor. In the denitration apparatus shown in FIG. 1, an ash hopper 27 for removing ashes entrained in the combustion flue gas is provided in the oblique upward flow path 22.

The air heating tubes 3 are installed in the flow path of the inlet duct. The air heating tube allows air to pass through an inside of the air heating tube, and the air passing through the inside of the air heating tube can be warmed by the thermal energy of the combustion flue gas. A temperature of the warmed air is not particularly limited as long as it is within a range in which the ammonia (liquid) can be heated to be vaporized in the ammonia vaporizer. As the ammonia (liquid), for example, an aqueous ammonia (ammonia water) or liquid ammonia can be used. When using aqueous ammonia, all of the solvent water may be vaporized.

The air heating tubes are preferably installed so as to align the turbulence of the combustion flue gas. By aligning the flow of the combustion flue gas, ammonia (gas) injected through the ammonia injection tube is uniformly mixed with the combustion flue gas. In addition, the combustion flue gas and ammonia (gas) flow evenly through the catalyst layer, and then the NOx removal efficiency can be increased and uneven deterioration and uneven wear of the catalyst layer can be suppressed.

In order to align the turbulence of the combustion flue gas, the air heating tubes are preferably arranged, for example, so that the longitudinal directions of the air heating tubes are parallel to each other and perpendicular to the longitudinal direction of the flow path of the inlet duct.

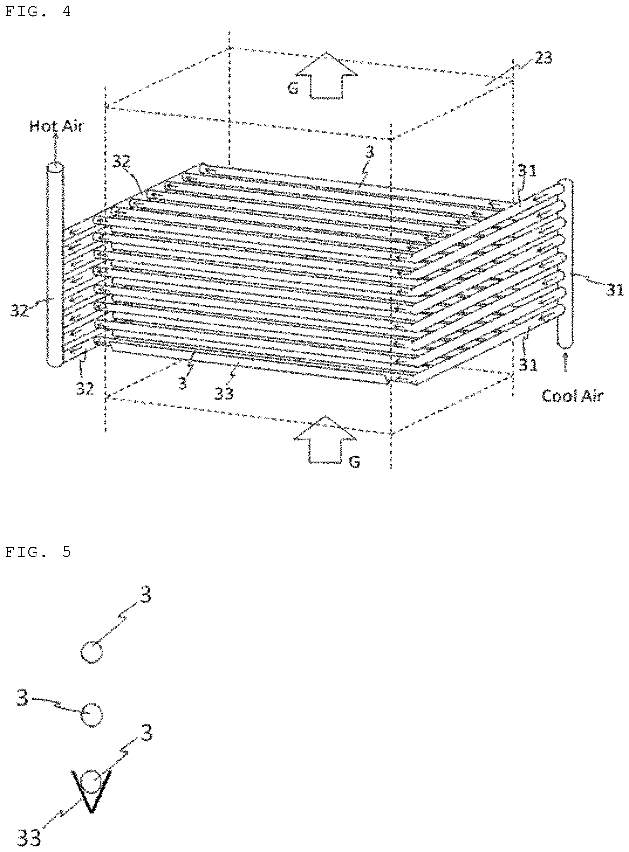

FIG. 4 shows an example of an arrangement of the air heating tubes. Low-temperature air is distributed to the air heating tubes 3 through the low-temperature air conveying tubes 31. The low-temperature air is warmed by the combustion flue gas while passing through an inside of the air heating tube in the flow path of the inlet duct. The warmed air (high-temperature air) is collected in the high-temperature air conveying tubes 32, and then can be supplied to the ammonia vaporizer 4. As the low-temperature air, used may be atmospheric air as it is, or air obtained by preheating atmospheric air or the like.

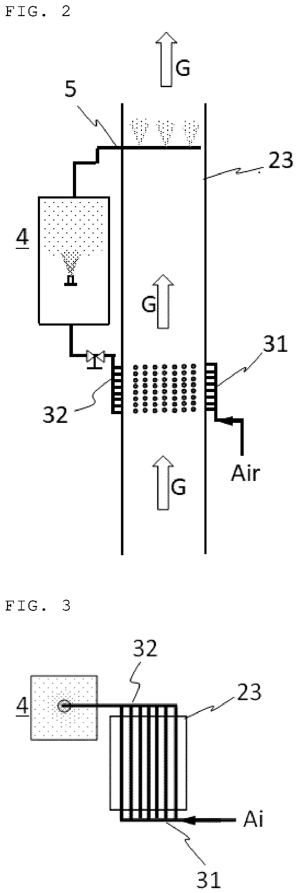

The air heating tubes shown in FIG. 4, but not limited to, are 8 vertical × 7 horizontal, 56 in total, and are arranged in a rectangular lattice array so that the longitudinal directions of the air heating tubes are parallel to each other and perpendicular to the longitudinal direction of the flow path of the inlet duct. The air heating tubes are arranged in a rectangular lattice array (Fig. 2) in the embodiment shown in Fig. 4, but the present invention is not limited to this array. For example, they may be arranged in a square lattice array, an orthorhombic lattice array, a hexagonal lattice array, or a distorted diagonal lattice array.

Additionally, to support (or suspend) the air heating tubes within the inlet duct, a beam (not shown) can be provided perpendicular to the longitudinal direction of the air heating tubes. A grid-like structure can be formed by the air heating tubes and the beams. In order to suppress oscillating motion of the air heating tubes, the air heating tubes adjacent to each other can also be connected and fixed with a wire or bar.

The combustion flue gas can flow in a direction substantially perpendicular to the longitudinal direction of the air heating tubes. As the flow direction of the combustion flue gas is abruptly changed by the air heating tubes (and beams), the ashes entrained in the combustion flue gas are shaken out of the combustion flue gas, the ash hopper 27 in the obliquely upward flow path 22 collects the ashes. In addition, the most upstream air heating tube (bottom in the figure) is provided with a baffle plate 33 having a gabled structure, as shown in FIG. 5, that extending in a gable shape along the ridgeline of the air heating tube, in order to reduce abrasion of the air heating tube by ash.

In the ammonia vaporizer 4, an high-temperature air conveying tube 32 for transporting air warmed by the air heating tubes and an ammonia conveying tube 42 for transporting ammonia (liquid) are connected to the ammonia vaporizer, and the ammonia (liquid) can be heated by mixing the ammonia (liquid) with the air warmed by the air heating tubes in the ammonia vaporizer. As a result, the ammonia (liquid) becomes ammonia (gas) having a predetermined temperature. The ammonia (liquid) is preferably sprayed in the vaporizer to facilitate vaporization. The ammonia flowing into the ammonia vaporizer may contain ammonia (gas). When ammonia water is used as the ammonia flowing into the ammonia vaporizer, all of the solvent water may be vaporized. Ammonia water is not particularly limited by its concentration, but a saturated concentration or a concentration close to it, a concentration common to concentrated ammonia water, for example, 25 to 28%, is preferred.

The ammonia vaporizer 4 can further comprise the air preheater 43. The air can be warmed by the air preheater 43, when the combustion flue gas does not have enough energy to warm the air, such as during the start-up period of the boiler, or, when the air cannot be heated by the air heating tubes, for example, due to trouble such as clogging occurs in the air heating tubes. Even if the air heating tube loses its function of warming air and the energy efficiency decreases somewhat, the function of aligning the flow of the combustion flue gas and the function of shaking out ash will not be lost. The effects of uniformly injecting ammonia (gas) into the combustion flue gas, preventing uneven wear of the catalyst layer, and increasing the denitration efficiency are not lost. By appropriately switching between the air preheater 43 and the air heating tubes 3, it is possible to optimize the utilization efficiency of the thermal energy generated in the boiler.

And, ammonia heated by the ammonia vaporizer can be injected into the flow path of the inlet duct through the ammonia injection tube 5 and mixed with the combustion flue gas. A hole (for example, a nozzle) for injecting ammonia (gas) is installed in the ammonia injection tube in the flow path of the inlet duct. The ammonia (gas) injected from the injection hole preferably does not contain ammonia (liquid). Only one hole for injecting ammonia (gas) may be provided, but two or more holes for injecting ammonia (gas) are preferably provided. The two or more injection holes are preferably arranged evenly, preferably at the same height level, over the cross-section of the flow path of the inlet duct. The nozzle arrangement can be a rectangular lattice array, a square lattice array, a rhombic lattice array, a hexagonal lattice array, or a skewed oblique lattice array.

The denitration apparatus and the ammonia feeding device of the present invention can be changed in structure, shape, arrangement, or the like without departing from main purport of the present invention. Also, members, mechanisms or the others used in the prior art can be added. It can be understood that aspects with such modifications or additions belong to the technical scope of the present invention.

### CODE LIST

- 1:: Denitration reactor
- 3:: Air heating tube
- 4:: Ammonia vaporizer
- 5:: Ammonia injection tube
- 6:: Catalyst layer
- 7 :: Screening plate
- 21:: First horizontal flow path
- 22:: Oblique upward flow path
- 23:: Vertical upward flow path
- 24:: Second horizontal flow path
- 25:: Oblique downward flow path
- 26:: Vertical downward flow channel
- 27 :: Ash hopper
- 31:: Low-temperature air conveying tube
- 32:: High-temperature air conveying tube
- 33:: Baffle plate
- 42:: Ammonia conveying tube
- 43:: Air preheater
- 44:: Combustion flue gas conveying tube
- G:: Combustion flue gas

## Claims

1. A denitration apparatus, comprising
a denitration reactor,
an inlet duct,
air heating tubes,
an ammonia vaporizer and
an ammonia injection tube,
wherein
the denitration reactor comprises a flow channel through which combustion flue gas flows and a catalyst layer located in the flow channel,
the inlet duct comprises a flow path configured to lead the combustion flue gas to the catalyst layer,
the air heating tubes are placed in the flow path of the inlet duct and configured to warm air passing through an inside of the air heating tube using thermal energy of the combustion flue gas,
the ammonia vaporizer is configured to mix ammonia with the warmed air in the ammonia vaporizer to warm the ammonia, and
the ammonia injection tube is configured to inject the ammonia warmed in the ammonia vaporizer into the flow path of the inlet duct through the ammonia injection tube to mix the warmed ammonia with the combustion flue gas.

2. The denitration apparatus according to claim 1, the air heating tubes are arranged such that longitudinal directions of the air heating tubes are parallel to each other and orthogonal to the longitudinal direction of the flow path of the inlet duct.

3. An ammonia feeding device for use in a denitration apparatus, wherein the denitration apparatus comprises a denitration reactor and an inlet duct, wherein the denitration reactor comprises a flow channel through which combustion flue gas flows and a catalyst layer located in the flow channel, and
the inlet duct comprises a flow path configured to lead the combustion flue gas to the catalyst layer,
the ammonia feeding device comprises air heating tubes, an ammonia vaporizer and an ammonia injection tube,
the air heating tubes are placed in the flow path of the inlet duct and configured to warm air passing through an inside of the air heating tube using thermal energy of the combustion flue gas,
the ammonia vaporizer is configured to mix ammonia with the warmed air in the ammonia vaporizer to warm the ammonia, and
the ammonia injection tube is configured to inject the ammonia warmed in the ammonia vaporizer into the flow path of the inlet duct through the ammonia injection tube to mix the warmed ammonia with the combustion flue gas.

4. The ammonia feeding device according to claim 3, the air heating tubes are arranged such that longitudinal directions of the air heating tubes are parallel to each other and orthogonal to the longitudinal direction of the flow path of the inlet duct.
